# EUROPEAN PATENT APPLICATION

(11) **EP 1 862 385 A1**
(43) Date of publication of application: **05.12.2007**
(21) Application number: 06011124.2
(22) Date of filing: 30.05.2006
(51) Int. Cl.: B62L 1/10, B62K 19/38

(54) **Bicycle structure with concealable brake**

(71) Applicant: Tsai, Shang-Ju, West District Taichung City 403 (TW)
(72) Inventor: Tsai, Shang-Ju, West District Taichung City 403 (TW)
(74) Representative: Zeitler, Giselher

(57) **Abstract**

This invention relates to a "bicycle structure with concealable brake", comprising a brake (10) and a frame (20). The frame is a front fork (20) having a positioning hole (200) positioned on the joint of two fork portions for the brake (10) to be pivotally disposed therein. In addition, the positions near the upper ends of the two fork portions (21) on the front fork (20) of said bicycle set two containing holes (211) for respectively containing two brake pads (11) of the brake (10); moreover, the activation of a brake cable (100) of the brake (10) enables the two brake pads (11) to respectively extend out of the containing holes (211) and clip a bicycle rim.

## Description

### BACKGROUND OF THE INVENTION

### (1) FIELD OF THE INVENTION

This invention relates to a "bicycle structure with concealable brake", in particular, a bicycle body that enables the brakes to be concealed in holes without being exposed outside the frame.

### (2) DESCRIPTION OF THE PRIOR ART

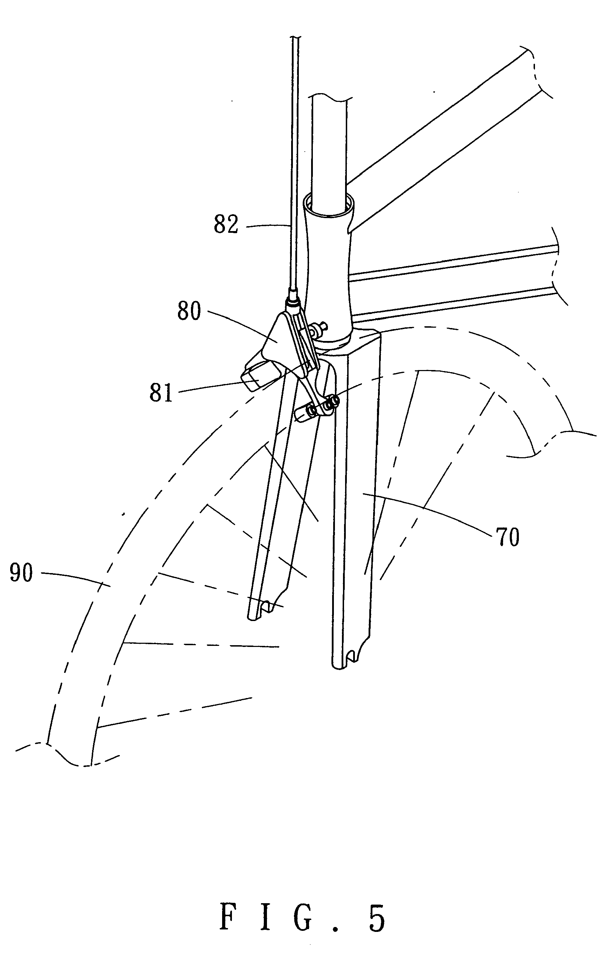

There are a variety of bicycle brakes of prior arts developed and sold on the market. With reference to Figure 5, a front fork 70 of a bicycle has a brake 80 pivotally set thereon. The brake 80 comprises two brake pads 81, which are activated by a brake cable 82, thereby enabling the two brake pads to clip a bicycle rim 90.

Said conventional brake 80 is used to apply the brake function by clipping the rim 90 to stop a bicycle; nevertheless, the conventional brake 80 is pivotally set on the front fork 70 and exposed outside, so as to reduce the bicycle appearance and increase the wind resistance when a user is riding a bicycle. In addition, seeing that the brake 80 is exposed outside, a bicycle rider is easily to contact the brake 80 and wound himself/herself. Therefore, the drawbacks of said conventional brake remain to be improved.

In view of the foregoing, a "bicycle structure with concealable brake" of the invention is hereafter disclosed to achieve the practicability effect in the industry.

### SUMMARY OF THE INVENTION

The main objective of the invention is to provide a bicycle structure with concealable brake for reducing the wind resistance while a rider is riding a bicycle; in addition, the invention is able to reduce the overall weight of said bicycle frame.

Another objective of the invention is to provide a bicycle structure with brakes concealed in the bicyle frame, so as to improve the bicycle appearance.

To achieve the foregoing objectives, the invention is, therefore, provided, comprising a brake and a bicycle frame.

The bicycle frame is a front fork, having a positioning hole positioned on the joint of two fork portions for the brake to be pivotally disposed therein. In addition, the positions near the upper ends of the two fork portions on the front fork of said bicycle set two containing holes for respectively containing two brake pads of the brake, moreover, the activation of a brake cable of the brake enables the two brake pads to respectively extend out of the containing holes and clip a bicycle rim.

The invention further comprises a lid for covering on the positioning hole. In addition, the frame comprises a seat stay, enabling a brake to be disposed therein, and a chain stay, enabling a brake to be disposed therein.

Further aspects, objects, and desirable features of the invention will be better understood from the detailed description and drawings that follow in which various embodiments of the disclosed invention are illustrated by way of examples.

### BRIEF DESCRIPTION OF THE DRAWINGS

Figure 1 is a three-dimensional exploded diagram of the invention;
Figure 2 is a three-dimensional diagram showing the assembly of the invention;
Figure 3 is a perspective view showing the outlook of operating the brakes of a preferred embodiment of the invention;
Figure 4 is a perspective view showing the assembly of the brakes of another preferred embodiment of the invention; and
Figure 5 is a perspective view showing the assembly of the brakes of a prior art.

### DETAILED DESCRIPTION OF THE PREFERRED EMBODIMENTS

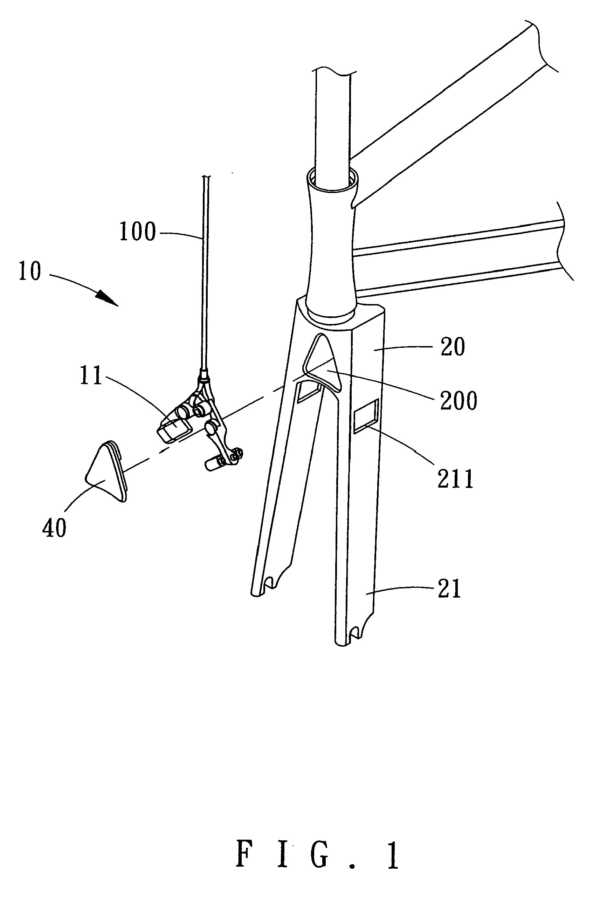

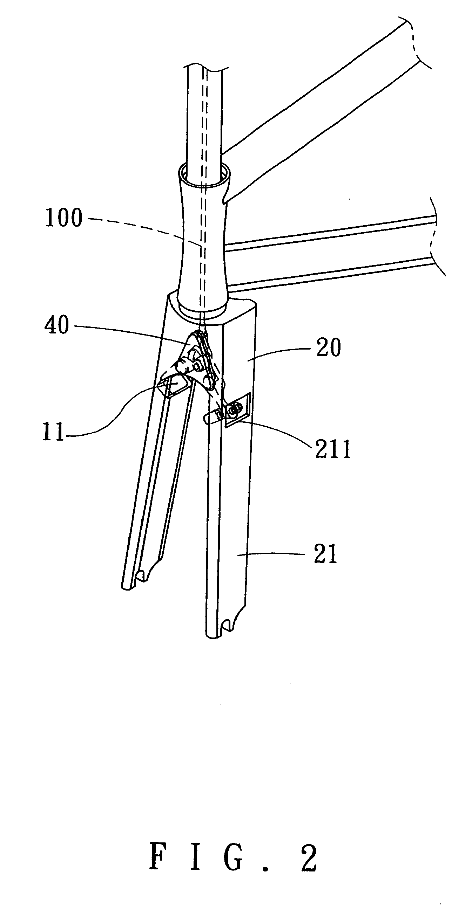

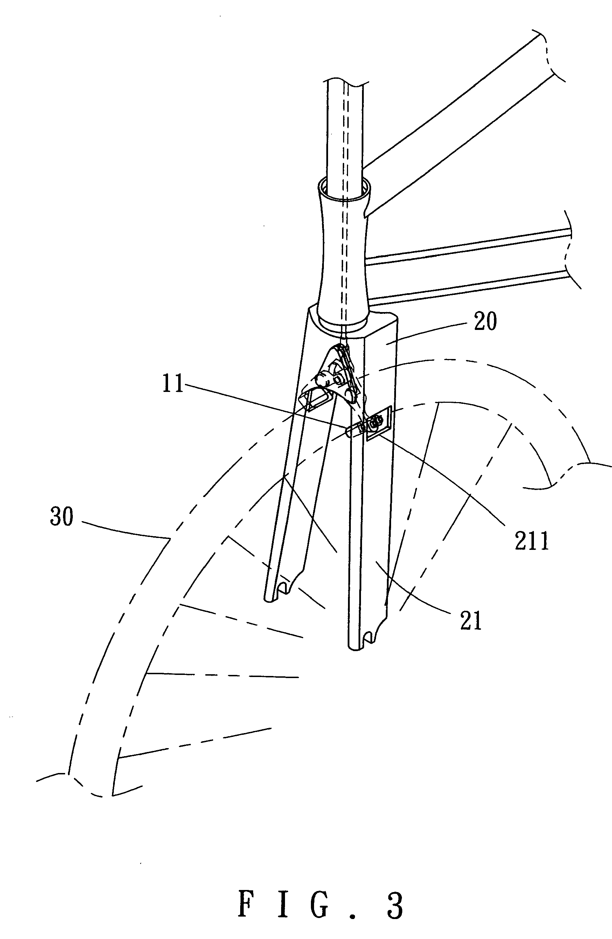

With reference to Figures 1, 2 and 3, a bicycle structure with concealable brake of the invention comprises a brake 10 and a frame.

The brake 10 is identical to a conventional brake and will not be further described hereafter.

Said frame is a front fork 20, having a positioning hole 200 set on the joint of two fork portions 21. The positioning hole is used for pivotally positioning the brake 10 therein. The positions near the upper ends of the two fork portions 21 on the front fork 20 of said bicycle set two containing holes 211 for respectively containing two brake pads 11 of the brake 10; moreover, the activation of a brake cable 100 of the brake 10 enables the two brake pads 11 to respectively extend out of the containing holes 211 and clip a bicycle rim 30 (as shown in Figures 1 to 3).

The invention further comprises a lid 40 covering on the positioning hole 200, enabling the brake 10 to be concealed inside the front fork 20 (as shown in Figure 1).

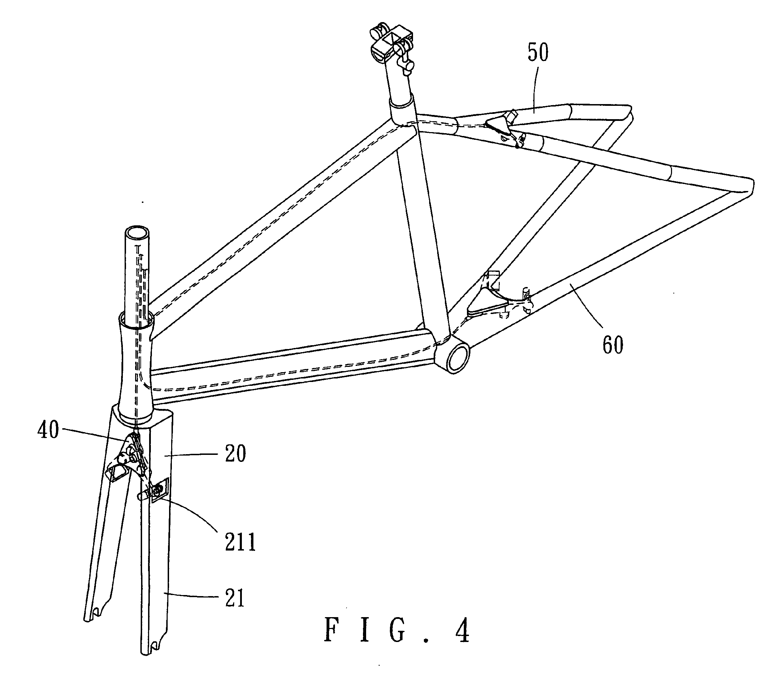

In addition, the brake 10 is able to be disposed inside a seat stay 50 or a chain stay 60, so as to achieve the foregoing effect (as shown in Figure 4).

With reference to Figures 1, 2 and 3, when a bicycle rider wants to stop the bicycle, s/he is able to apply the invention to clip the rim 30 for braking the bicycle by gripping handlebars (not shown). Therefore, the brake cable 100 of the brake 10 enables the brake pads 11 to respectively extend out of the containing holes 211 and clip the rim 30 for stopping the bicycle (as shown in Figure 1 to 3).

Seeing that the brake 10 of the invention is positioned inside the positioning hole 200 of the front fork 20, in addition, the two brake pads 11 of the brake 10 is contained in the containing holes 211 near the upper ends of the two fork portions 21 on the front forks 20 (as shown in Figures 1 to 3), the brake 10 is, therefore, concealed in the bicycle frame, thereby enabling the wind resistance to be reduced while a rider is riding the bicycle, at the same time, the weight of the whole bicycle frame is reduced. Moreover, the invention increases the overall bicycle appearance and is applicable to mechanical and hydraulic press brakes.

In conclusion, said "bicycle structure with concealable brake" of the invention effectively improves the drawbacks of conventional brakes, therefore, the invention possesses practical effect in the field.

New characteristics and advantages of the invention covered by this document have been set forth in the foregoing description. It is to be expressly understood, however, that the drawings are for the purpose of illustration only and are not intended as a definition of the limits of the invention. Changes in methods, shapes, structures or devices may be made in details without exceeding the scope of the invention by those who are skilled in the art. The scope of the invention is, of course, defined in the language in which the appended claims are expressed.

## Claims

1. A bicycle structure with concealable brake, comprising a brake and a frame;
the frame is a front fork, having a positioning hole positioned on the joint of two fork portions for the brake to be pivotally disposed therein; two containing holes set on the positions near the upper ends of the two fork portions on the front fork of said bicycle for respectively containing two brake pads of the brake; the activation of a brake cable of the brake enables the two brake pads to respectively extend out of the containing holes and clip a bicycle rim.

2. The bicycle structure with concealable brake of claim 1, further comprising a lid for covering on the positioning hole.

3. The bicycle structure with concealable brake of claim 1, wherein the frame comprises a seat stay, enabling the brake to be disposed therein.

4. The bicycle structure with concealable brake of claim 1, wherein the frame comprises a chain stay, enabling the brake to be disposed therein.
